# EUROPÄISCHE PATENTSCHRIFT

(11) **EP 1 440 930 B1**
(45) Veröffentlichungstag und Bekanntmachung des Hinweises auf die Patenterteilung: **13.04.2016**
(21) Anmeldenummer: 04000769.2
(22) Anmeldetag: 15.01.2004
(51) Int. Cl.: B66B 1/46, B66B 13/00, F16P 3/08, E05B 65/10

(54) **Türverschluss mit Notentriegelung**
Door lock with emergency unlocking arrangement
Serrure de porte à déverrouillage de secours

(30) Priorität: 15.01.2003 DE 10301325
(43) Veröffentlichungstag der Anmeldung: 28.07.2004
(73) Patentinhaber: Hans & Jos. Kronenberg GmbH, 51427 Bergisch Gladbach (DE)
(72) Erfinder: Loose, Horst, 40764 Langenfeld (DE); Klaus, Holger, 51427 Bergisch Gladbach (DE)
(74) Vertreter: Gudat, Axel

(56) Entgegenhaltungen:
- EP-A- 0 737 789
- WO-A-95/00733
- FR-A- 1 435 744
- FR-A- 2 701 506
- FR-A- 2 791 081

## Beschreibung

Die Erfindung betrifft einen Türverschluss, insbesondere einer Schachttür eines Aufzuges, wobei der Türverschluss ein Gehäuse und einen Riegel aufweist, der bezüglich der Tür in eine Verriegelungsstellung und in eine Freigabestellung überführbar ist und der in dem Gehäuse gelagert ist, wobei der Verschluss eine manuell betätigbare Notentriegelung zur Überführung des Riegels in seine Freigabestellung aufweist. Die Notentriegelung weist einen Mitnehmer auf, der unter Überführung des Riegels in die Freigabestellung durch einen Notentriegelungsschlüssel betätigbar ist.

Gattungsgemäße Türverschlüsse sind bekannt, beispielsweise aus der FR 2 701 506, und werden insbesondere in Verbindung mit Schachttüren von Aufzügen verwendet. Durch die Notentriegelung wird ein von dem Normalbetrieb verschiedener Betrieb des Aufzuges oder einer Maschine allgemein ermöglicht. Um z.B. Wartungsarbeiten durchführen zu können muss der Zugang oberhalb oder unterhalb der Aufzugskabine möglich sein, wobei dann der normale Aufzugbetrieb verhindert sein muss. Oftmals ist an dem oberen oder unteren Ende des jeweiligen Aufzugsschachtes ein Schutzraum vorgesehen, um bei unkontrollierter Bewegung des Aufzuges Verletzungen des Wartungspersonais zu vermeiden. Soll jedoch in bestehenden Gebäuden ein Aufzug installiert werden, ist es vorgeschrieben, bei fehlendem Schutzraum in dem Aufzugschacht zumindest einen beweglichen Anschlag bereitzustellen, der in eine Stellung gebracht werden kann, die eine weitere Bewegung der Aufzugskabine verhindert, um so einen minimalen Schutzraum zu gewährleisten. Nach der Durchführung der Inspektionsfahrt und Zurücksetzen des Inspektionsschalters in seine Grundstellung sowie Überführung des beweglichen Anschlages in seine nicht aktive Stellung muss das Wartungspersonal den Schacht verlassen und die Schachttür schließen. Als letzte Maßnahme einer Europa-Norm (Vornorm prEN 81-21) darf dann der Aufzug nur durch eine bewusste Betätigung einer Einrichtung, die außerhalb des Schachtes angeordnet und nur Befugten zugänglich ist, in den Normalbetrieb zurückgesetzt werden können. Die Maßnahmen hierzu müssen zwangsläufig wirken. Hierbei ist es erwünscht, dass die Einrichtung für befugte Personen leicht zugänglich, leicht montierbar und einfach zu warten ist.

Unabhängig hiervon können gattungsgemäße Türverschlüsse auch an anderen Maschinen mit beweglichen Teilen, insbesondere Fördereinrichtungen, eingesetzt werden, um die Betriebssicherheit zu erhöhen. Der Schacht entspricht hierbei allgemein dem Raum innerhalb des Aktionsbereichs der Maschine, zu dem das Wartungspersonal zur Wartung Zugang haben muss. Unter den Begriff "Tür" sollen ferner Verschlussklappen oder andere Absperrungen allgemein fallen.

Der Erfindung liegt die Aufgabe zugrunde, einen gattungsgemäßen Türverschluss zu schaffen, der an die Betätigung der außerhalb des Schachtes anzuordnenden Einrichtung zum Zurücksetzen und/oder Wiederinbetriebsetzung der Maschine, insbesondere des Aufzuges, besonders angepasst ist.

Die Aufgabe wird durch einen Türverschluss gemäß Anspruch 1 gelöst. Der Sicherheitsschalter oder zumindest ein Teil oder die gesamte elektrische Sicherheitsschaltung zur Unterbrechung der Normalfahrt der Maschine, insbesondere eines Aufzuges, und/oder zur Wiederaufnahme der Normalfahrt sind besonders leicht zugänglich. Ferner sind durch die gleichzeitige Anordnung der Notentriegelung und des Sicherheitsschalters bzw. des Betätigungselementes für eine elektrische Sicherheitsschaltung in dem Türverschluss mehrere Funktionen vereint, wobei insbesondere die räumliche Nähe von Notentriegelung und Sicherheitsschalter einen hohen Bedienungskomfort, eine einfache bauliche Ausführung und eine hohe Sicherheit gewährleistet. Die Montage des Sicherheits schalters bzw. der elektrischen Sicherheitsschaltung werden hierdurch ferner wesentlich vereinfacht. Der Sicherheitsschalter kann in dem Gehäuse des Türverschlusses oder in einem separaten Gehäuse angeordnet sein, das an dem Türverschlussgehäuse angeordnet oder befestigt ist. Durch den Sicherheitsschalter bzw. die Sicherheitsschaltung kann eine Sicherheitsfunktion auslösbar sein, z.B. ein Normalbetrieb einer der Tür zugeordneten Einrichtung wie z.B. eines Aufzuges unterbrechbar und/oder wiederaufnehmbar sein. Hierzu kann der Sicherheitsschalter in geeigneter Weise mit einer Steuerung des Aufzuges bzw. der Maschine verbunden oder verbindbar sein.

Bevorzugte Ausführungsformen ergeben sich aus den Unteransprüchen.

Im Rahmen der Erfindung sei bei der Verwendung des Begriffes "Sicherheitsschalter" eine entsprechende elektrische Sicherheitsschaltung oder ein Schaltungsteil derselben mit umfasst. Der Sicherheitsschalter oder die elektrische Sicherheitsschaltung sollen ferner vorzugsweise die Erfordernisse nach EN 81-1, 14.1.2.2 erfüllen. Der Sicherheitsschalter soll somit mit den erforderlichen zwangsöffnenden Eigenschaften und erforderlichen Trennstrecken ausgestattet sein. Eine mechanisch zwangsläufige Trennung entsprechend der Funktion eines derartigen Sicherheitsschalters wird erreicht, wenn alle unterbrechenden Schaltstücke in die Trennstellung gebracht werden, und wenn für einen wesentlichen Teil des Weges keine nachgiebigen Elementen wie z. B. Federn zwischen den beweglichen Schaltstücken und dem Teil des Betätigungsgliedes, auf den die Betätigungskraft wirkt, vorhanden sind. Die erforderlichen Trennstrecken der Schaltstücke des entsprechenden Sicherheitsschalters müssen nach EN 81-1, 14.1.2.3 nach der Auftrennung 4 mm betragen. Bei Mehrfachunterbrechungen müssen die einzelnen Trennstrecken nach Auftrennung mindestens 2 mm betragen. Es versteht sich dass der Sicherheitsschalter des erfindungsgemäßen Türverschlusses gegebenenfalls auch andere Trennstrecken aufweisen kann, in seiner Sicherheitsfunktion den oben genannten Anforderungen jedoch im wesentlichen entsprechen sollte.

Der zwangsläufig wirkende Sicherheitsschalter des erfindungsgemäßen Türverschlusses, wird daher bei Betätigung des Türverschlusses mittels der Notentriegelung, ausgelöst und zwarausschließlich durch diese, nicht jedoch durch den Regelbetrieb des zugeordneten Aufzuges.

Vorzugsweise ist ein Entkoppelungsmechanismus vorhanden, der bei betriebsgemäßer Betätigung des Türverschlusses durch eine externe Einrichtung der Maschine bzw. des Aufzuges die Entriegelung des Riegels von der Betätigung der Notentriegelung und/ oder des Schalters entkoppelt.

Der Mitnehmer zur Betätigung des Sicherheitsschalters ist identisch zu dem Mitnehmer zur Betätigung der Notentriegelung.

Die Zuordnung der Mitnehmer und Schlüssel zueinander kann derart erfolgen, dass über einen Dreikantschlüssel (wie er für diesen Zweck - insbesondere im Bereich der Aufzugtechnik - bekannt ist) mit korrespondierendem Mitnehmer eine herkömmliche Notentriegelung zur Personenbefreiung durch Hilfspersonal wie Hausmeister, Feuerwehr oder dergleichen erfolgen kann, wodurch beispielsweise auch ein Zugang unter- und/oder oberhalb der Aufzugkabine ermöglicht wird. Durch einen hiervon verschiedenen speziellen Schlüssel sind nur der Sicherheitsschalter oder auch nach einer anderen Ausführungsform der Sicherheitsschalter und die Notentriegelung gemeinsam zur Durchführung einer Inspektionsfahrt betätigbar. Der Sicherheitsschalter ist somit nur durch einen von einem Dreikantschlüssel verschiedenen Schlüssel betätigbar (es versteht sich, dass bei entsprechender Ausgestaltung des Mitnehmers dieser auch durch einen Dreikantschlüssel betätigbar sein kann). Der Mitnehmer für die Notentriegelung kann hierbei an der Drehachse eines Winkelhebels angeordnet sein, der mit einem Ende an dem Riegel mittelbar oder unmittelbar ankoppelt. Der Mitnehmer für den Sicherheitsschalter kann über einen Koppelungsmechanismus an einem Ende eines Winkelhebels ankoppeln, dessen anderes Ende mit dem Riegel zusammenwirkt, wobei jeweils auch andere Ausführungen möglich sind.

In dem Türverschlussgehäuse können außer dem Mitnehmer für den Schalter und/oder die Notentriegelung ferner dem jeweiligen Mitnehmer zugeordnete Betätigungsmittel vorgesehen sein, die durch eine Bewegung des Mitnehmers die Notentriegelung und/oder den Sicherheitsschalter schalten. Die Mitnehmerbewegung kann axial und/oder rotatorisch erfolgen. Durch die Betätigungsmittel kann der der Sicherheitseinrichtung zugeordnete Schalter und/oder die Notentriegelung an einer geeigneten Stelle innerhalb des Gehäuses, gegebenenfalls räumlich getrennt von dem jeweiligen Mitnehmer, angeordnet werden, wodurch der durch das Gehäuse bereitgestellte Bauraum optimal nutzbar ist.

Erfindungsgemäß ist der Sicherheitsschalter derart mit der Notentriegelung gekoppelt, dass bei Betätigung der Notentriegelung durch einen geeigneten Mitnehmer der Sicherheitsschalter die Sicherheitseinrichtung auslöst, die eine Sicherheitsfunktion bei zumindest teilweiser Überführung des Riegels in die Freigabestellung ausübt. Der Mitnehmer kann unmittelbar oder vorzugsweise durch ein Betätigungsmittel an dem Schalter oder an der Notentriegelung ankoppeln, wobei ein Mechanismus zur Betätigung der jeweils anderen Einrichtung vorgesehen ist.

Das Betätigungsmittel des Sicherheitsschalters, durch welchen der dem Schalter zugeordnete Mitnehmer diesen betätigt, kann als in dem Türverschlussgehäuse gelagertes Drehteil, insbesondere als Nockenscheibe oder Wippe ausgeführt sein, die mittelbar oder unmittelbar durch den Schlüssel betätigbar ist und/oder mittelbar oder unmittelbar auf den Sicherheitsschalter wirkt. Das Betätigungsmittel ist nicht auf die obigen vorteilhaften Ausführungen beschränkt, es kann allgemein zur Betätigung des Sicherheitsschalters geeignet ausgebildet sein und beispielsweise ein zusätzliches Bauteil darstellen oder auch Teil des Mitnehmers oder des Sicherheitsschalters sein. Das Betätigungsmittel kann ein- oder mehrteilig ausgeführt sein.

Das Betätigungsmittel kann eine Wegübersetzung aufweisen, die auch zwischen einem durch den Mitnehmer betätigbaren Schieber und dem Schalter vorgesehen sein kann, wobei die Übersetzung die axiale und/oder rotatorische Bewegung des Mitnehmers in eine Bewegung größeren Weges übersetzt, die unmittelbar oder mittelbar auf den Sicherheitsschalter wirkt. Eine derartige Übersetzung ist vorzugsweise als Nockenscheibe oder Wippe ausgeführt, es können jedoch auch andere geeignete Übersetzungsmittel vorgesehen sein.

Vorzugsweise greift das Betätigungsmittel an einer Verlängerung des dem Schalter und/oder der Notentriegelung zugeordneten Mitnehmers an, der zur Drehachse des Mitnehmers versetzt angeordnet ist. Der Mitnehmer der Notentriegelung kann hierbei an einem Winkelhebel angeordnet sein, der um den Mitnehmer drehbar gelagert ist, wobei ein Ende des Winkelhebels mittelbar oder vorzugsweise unmittelbar an dem Riegel angreift, wobei das Ende insbesondere als Zahnhebel ausgestaltet sein kann, und wobei das andere Ende des Winkelhebels mit einer Koppelungseinrichtung gekoppelt, insbesondere verbunden ist, oder Teil einer Koppelungseinrichtung ist, wozu das Ende unmittelbar mit einer Zugstange verbunden sein kann. Die Koppelungseinrichtung wird weiter unten näher beschrieben. Unabhängig hiervon oder in Kombination hiermit kann der dem Riegel abgewandte Schenkel des Winkelhebels mit einer Gelenkverbindung versehen sein, die gelenkig mit einem Teil des Koppelungsmechanismus oder einer weiteren Einrichtung wie einem weiter unten näher beschriebenen Übertragungsmechanismus ankoppeln kann. Diese Ankoppelung kann derart erfolgen, dass bei einer Betätigung des Winkelhebels durch eine externe Einrichtung oder durch die Notentriegelung die Betätigung des Schalters hiervon entkoppelt ist.

Unabhängig von der sonstigen Ausgestaltung des Betätigungsmittels ist dieses vorzugsweise derart ausgeführt, dass durch Betätigung des Schlüssels zunächst der Sicherheitsschalter und zeitlich nachfolgend hierzu der Riegel betätigt wird. Hierbei kann die beginnende oder die endgültige Bewegung des Riegels in seine Freigabestellung zeitlich nachfolgend der Betätigung des Sicherheitsschalters erfolgen.

Bei gattungsgemäßen Türverschlüssen kann ein Koppelungsmechanismus vorgesehen sein, der mit dem Riegel zusammenwirkt und der durch eine bezüglich des Türverschlusses externe Einrichtung wie beispielsweise durch die verfahrbare Kabine unter Überführung des Riegels in seine Freigabestellung betätigbar ist. Der Koppelungsmechanismus kann vielfältig ausgeführt sein, beispielsweise als Zugstange, als Rollenhebel, insbesondere als auf dem Gehäuse aufgeschraubter Rollenhebel, als Seitenlagerbock oder auf andere geeignete Weise, oder ein solches Element umfassen. Es können auch mehrere Koppelungsmechanismen gleichzeitig vorhanden sein, so dass das Gehäuse beispielsweise mit einem Rollenhebel und einer Zugstange versehen sein kann. Gegebenenfalls können auch mehrere Türverschlüsse untereinander gekoppelt sein, beispielsweise durch eine Zugstange, die zwei Türverschlüsse miteinander verbindet und hierzu an dem Koppelungsmechanismus eines anderen Türverschlusses angreift. Bei einem derartigen Türverschluss ist der dem Schalter und/oder der Notentriegelung zugeordnete Mitnehmer vorzugsweise von dem Koppelungsmechanismus getrennt angeordnet, wobei ein Übertragungsmechanismus zur Übertragung der Bewegung des Mitnehmers auf den Koppelungsmechanismus und/oder auf den Riegel vorgesehen ist, mittels dessen durch Betätigung des Mitnehmers der Riegel in seine Freigabestellung überführbar ist. Hierdurch kann die Position des Mitnehmers räumlich getrennt von dem Koppelungsmechanismus und einem gegebenenfalls vorgesehenen separaten Mitnehmer für die Notentriegelung bzw. dem Schalter vorgesehen sein, so dass der Ort des Mitnehmers innerhalb des Gehäuses als auch des Mechanismus zur Übertragung der Bewegung des Mitnehmers auf den Riegel vielfältig variierbar ist.

Vorzugsweise ist der Türverschluss derart ausgeführt, dass bei einer Betätigung des Riegels durch den Koppelungsmechanismus aufgrund einer Einwirkung der externen Einrichtung der Mitnehmer und/oder der Betätigungsmechanismus des Schalters von dem Koppelungsmechanismus und/oder dem Riegel entkoppelt sind. Der Sicherheitsschalter ist so nur durch Betätigung des Mitnehmers mittels des zugeordneten Schlüssels und/oder durch Betätigung des Mitnehmers der Notentriegelung , nicht aber durch Betätigung des Koppelungsmechanismus durch die externe Einrichtung betätigbar, durch den ebenfalls der Riegel in seine Freigabestellung überführbar ist. Die Auslösung der Sicherheitsfunktion wie z.B. die Unterbrechung des Normalbetriebs erfolgt somit nur, wenn die manuelle Betätigung bewusst über den Schlüssel erfolgt und nicht bei normalem Betrieb des Aufzuges.

Der Übertragungsmechanismus, durch den der Mitnehmer des Sicherheitsschalters mit dem Koppelungsmechanismus oder, vorzugsweise unmittelbar, dem Riegel ankoppelt kann ein Entkoppelungsglied aufweisen oder mit dem Koppelungsmechanismus unter Ausbildung eines Entkoppelungsgliedes zusammenwirken, damit der Riegel durch die externe Einrichtung ohne Auslösung der Sicherheitseinrichtung in seine Freigabestellung überführbar ist. Hierzu kann beispielsweise ein Angriffselement des Übertragungsmechanismus außerhalb des Wirkbereichs des Koppelungsmechanismus angeordnet sein, z.B. auf der der Bewegungsrichtung abgewandten Seite eines Angriffselementes desselben, wobei das Angriffselement des Übertragungsmechanismus auf den Koppelungsmechanismus hin bewegbar ist, um an diesen angreifen zu können. Gegebenenfalls kann die Entkoppelung auch durch eine andere Wegentkopplung oder auch durch eine Kraftentkoppelung erfolgen, so dass zur Betätigung der beiden Einrichtungen unterschiedliche Kräfte notwendig sind, oder auch auf andere geeignete Weise. Das Entkoppelungselement oder ein anderes geeignetes Element des Mechanismus kann auch ein Spiel aufweisen, damit zunächst der Sicherheitsschalter und erst zeitlich nachfolgend hierzu der Riegel in die Freigabestellung überführt wird.

Weist der Koppelungsmechanismus zumindest zwei durch eine Gelenkverbindung verbundene Bauteile auf, so wirkt der Übertragungsmechanismus vorzugsweise an der Gelenkverbindung mit dem Koppelungsmechanismus zusammen, beispielsweise mit einem vorgesehenen Gelenkstift, wodurch eine konstruktiv einfache Ausführungsform gegeben ist. Der Übertragungsmechanismus kann jedoch auch an einer anderen geeigneten Stelle des Koppelungsmechanismus angreifen, beispielsweise an einem speziell hierfür oder bereits für andere Zwecke vorgesehenen Mitnehmer, der beispielsweise an einem Gestängeteil oder Drehteil des Koppelungsmechanismus vorgesehen sein kann. Gegebenenfalls kann auch der Mitnehmer unmittelbar an dem Koppelungsmechanismus angreifen.

Der Übertragungsmechanismus kann beispielsweise eine Winkelstange aufweisen. Durch die Anordnung einer Winkelstange kann auf einfache Weise ein Querversatz des Übertragungsmechanismus erzeugt werden, so dass eine günstige Kraftübertragung möglich ist und gleichzeitig bei geringer Anzahl von Bauteilen die Lage der beiden Enden der Winkelstange zur Längsrichtung derselben variiert werden kann, so dass die Lage des Sicherheitsschalters frei wählbar ist. Die Winkelstange kann ein-, zwei- oder mehrfach abgewickelt sein, vorzugsweise mit zumindest teilweise oder stets gegensinniger Abwinkelung aufeinanderfolgender Abwinkelungsstellen.

Der Übertragungsmechanismus kann ein durch den Mitnehmer betätigbares Drehteil, beispielsweise eine Nockenscheibe, aufweisen, die über ein Gestängeteil, insbesondere über einen Schieber oder eine Winkelstange, mit dem Koppelungsmechanismus zusammenwirken kann. Hierdurch ist bei großer Variabilität des Übertragungsmechanismus eine gute Kraftübertragung gewährleistet. Das Drehteil kann unmittelbar durch den Mitnehmer oder unter Zwischenschaltung weiterer Elemente betätigbar sein. Gegebenfalls kann die Zusammenwirkung von Dreh- und Gestängeteil auch umgekehrt sein, so dass das Gestängeteil mit dem Mitnehmer zusammenwirkt.

Unabhängig hiervon, jedoch vorzugsweise in Kombination hiermit, ist ein Drehteil vorgesehen, welches vorzugsweise unmittelbar durch den dem Schalter zugeordneten Mitnehmer betätigbar ist, wobei das Drehteil mittelbar oder unmittelbar auf den Sicherheitsschalter wirkt und zugleich Teil des Übertragungsmechanismus ist, der eine rotatorische und/oder axiale Bewegung des Mitnehmers auf den Koppelungsmechanismus oder vorzugsweise unmittelbar auf den Riegel übertragen kann. Das Drehteil ist hierbei vorzugsweise einstückig mit dem Mitnehmer verbunden oder an diesem unmittelbar festgelegt. Das Drehteil kann insbesondere als Nockenscheibe ausgeführt sein, wobei durch die Krümmung einer Drehteilfläche, z.B. der Nockenoberfläche, die vorzugsweise unmittelbar an dem Sicherheitsschalter angreift, eine Wegübersetzung bezüglich der Bewegung des Mitnehmers und der Bewegung des Betätigungselementes des Schalters optimal einstellbar ist.

Das Drehteil kann auch an einem Winkelhebel des Koppelungsmechanismus angreifen.

Vorzugsweise ist der Winkelhebel mit einem Schenkel ausgestattet, der mittels einer Gelenkverbindung wie eines Gelenkbolzens die Anbringung einer Zugstange für einen externen Koppelungsmechanismus ermöglicht. Diese Stelle des Winkelhebels ist besonders für einen entkoppelten Übertragungsmechanismus durch den Schieber geeignet, so dass bei Normalbetrieb durch den Koppelungsmechanismus der Sicherheitsschalter nicht betätigt wird.

Der Übertragungsmechanismus, insbesondere ein Gestängeteil wie beispielsweise ein Schieber desselben, greift vorzugsweise an einem drehbar gelagerten Winkelhebel des Koppelungsmechanismus an, wobei ein Ende des Winkelhebels, der der externen Einrichtung zugewandt ist, durch welche der Koppelungsmechanismus betätigbar ist, an dem Übertragungsmechanismus angreift und wobei der andere Schenkel des Winkelhebels mittelbar oder unmittelbar an dem Riegel angreift. Der Winkelhebel kann in seinem Drehpunkt einen Mitnehmer einer dann direkt wirkenden Notentrieglung aufweisen oder mit einem derartigen Mitnehmer gekoppelt sein. Unter dem Angriff des Übertragungsmechanismus mit dem Winkelhebel sei hierbei der Zustand verstanden, in welchem der Übertragungsmechanismus durch den Mitnehmer betätigt wird, wobei in einem anderen Zustand Übertragungs- und Koppelungsmechanismus voneinander entkoppelt sein können, so dass durch eine Betätigung des Koppelungsmechanismus, z.B. aufgrund der externen Einrichtung, der Sicherheitsschalter nicht betätigbar ist. Alternativ kann der Koppelungsmechanismus auch an der Achse des verschwenkbaren Winkelhebels oder an anderer geeigneter Stelle angreifen, beispielsweise wenn der Koppelungsmechanismus als Rollenhebel ausgeführt ist.

Ferner kann ein Sperrmittel vorgesehen sein, welches zumindest eine Schaltstellung des Sicherheitsschalters und/oder der Notentriegelung sperrt. Das Sperrmittel kann ausgeführt sein, um eine unbeabsichtigte Rücküberführung des Sicherheitsschalters in eine die Wiederaufnahme der Normalfahrt des Aufzuges (oder der Maschine allgemein) gestattende Position zu verhindern. Hierzu ist vorzugsweise ein selbstsperrendes Mittel, z. B. in Form eines federbelasteten Sperrorgans, vorgesehen. Das Sperrmittel kann beispielsweise an einem Kontaktbrückenträger des Sicherheitsschalters, an dem zugeordneten Mitnehmer oder an einem an diesem ankoppelnden Bauteil wie insbesondere an einer durch den Mitnehmer betätigbaren, insbesondere durch diesen unmittelbar verdrehbaren Nockenscheibe angreifen, insbesondere einrasten, wobei die Lage des Bauteils mittelbar oder unmittelbar den Sicherheitsschalter in seiner geöffneten Stellung hält. Das Sperrmittel kann gegebenenfalls manuell durch eine besondere Handlung, vorzugsweise mit einem speziellen Werkzeug entriegelt werden, oder durch eine Einrichtung wie einen Elektromagneten, der von einer externen Stelle, beispielsweise in der Steuerung, durch eine Fernauslösung ausgelöst wird.

Vorzugsweise ist ferner ein Mittel zur Rücküberführung des Sperrmittels in eine Nichtsperrstellung, insbesondere in seine nichtsperrende Ausgangsstellung, aus welcher das Sperrmittel betätigbar ist, vorgesehen. Die Rücküberführung des Sperrmittels kann insbesondere durch elektrische, einschließlich elektrooptische und elektromagnetische Stellmittel, erfolgen. Die Rückstellung der Sperre kann insbesondere durch eine Fernauslösung ausgelöst werden, die an einer externen Stelle außerhalb des Türverschlusses angeordnet sein kann, vorzugsweise zusammen mit der Fernauslösung zur Überführung des Sperrmittels in seine die Rücküberführung des Sicherheitsschalters verhindernde Sperrstellung.

Der Notentriegelung kann ein Schließer zugeordnet sein, durch welchen der bewegliche Anschlag auslösbar ist, wobei der Schließer derart mit der Notentriegelung gekoppelt ist, dass dieser bei Betätigung der Notentriegelung ebenfalls betätigt wird. Gegebenenfalls kann die Betätigung gleichzeitig oder aufgrund der Ausführung des Kopplungsmechanismus mit einer gewissen zeitlichen Verzögerung erfolgen. Die Auslösung kann insbesondere elektrisch, besonders bevorzugt elektromagnetisch, einschließlich elektrooptisch, erfolgen, wodurch der Anschlag automatisch in die zugeordnete Schutzstellung überführt wird.

Die Erfindung wird im folgenden beispielhaft beschrieben und anhand der Figuren beispielhaft erläutert. Es zeigen:
- Figur 1: eine schematische Darstellung eines erfindungsgemäßen Türverschlusses in einer ersten Schaltstellung (Figur 1a) und in einer zweiten Schaltstellung des Sicherheitsschalters (Figur 1b),
- Figur 2: eine schematische Darstellung eines weiteren Ausführungsbeispiels des erfindungsgemäßen Türverschlusses in einer ersten Schaltstellung (Figur 2a) und in einer anderen Schaltstellung des Sicherheitsschalters (Figur 2b),
- Figur 3: eine schematische Darstellung eines weiteren Ausführungsbeispiels des erfindungsgemäßen Türverschlusses in drei unterschiedlichen Schaltstellungen (Figur 3a,b,c) und
- Figur 4: eine schematische Darstellung eines weiteren Ausführungsbeispiels mit in beiden Richtungen sperrbarer Notentriegelung in drei unterschiedlichen Schaltstellungen (Figur 4a,b,c).

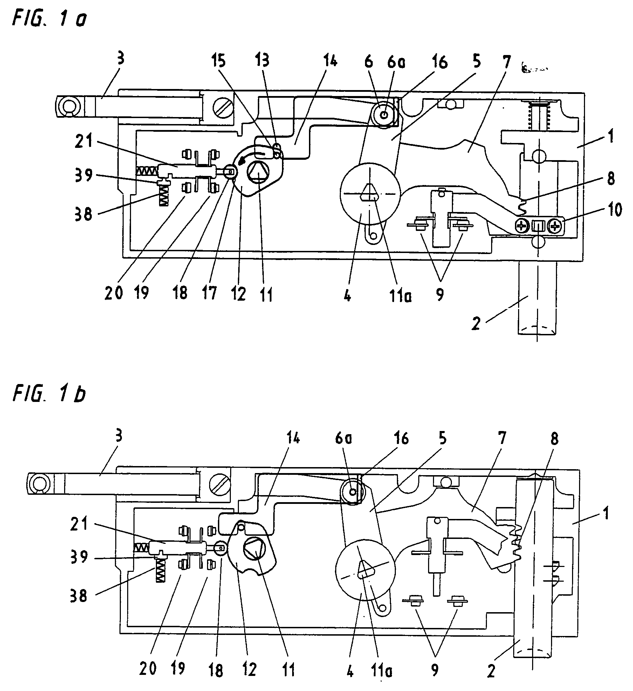

Figur 1 zeigt einen erfindungsgemäßen Türverschluss mit einem Gehäuse 1, in dem ein bolzenförmiger Riegel 2 verschieblich gelagert ist, welcher bezüglich einer nicht dargestellten korrespondierenden Tür in eine Verriegelungsstellung (Figur 1a) und in eine Freigabestellung (Figur 1b) überführbar ist.

Der Türverschluss ist als Verschluss für eine Schachttür eines Aufzuges ausgestaltet. Zur Betätigung des Riegels 2 bei normalem Fahrbetrieb des Aufzuges ist ein Koppelungsmechanismus bestehend aus einer Zugstange 3 und einem drehbar gelagerten Winkelhebel 4 vorgesehen, wobei ein Schenkel 5 des Winkelhebels mit der Gelenkverbindung 6, die durch einen Gelenkstift 6a erzeugt wird, mit der Zugstange 3 verbunden ist und wobei der andere Schenkel 7 des Winkelhebels als Zahnhebel mit einer Verzahnung 8 versehen ist, die an dem Riegel 2 angreift. Die Zugstange 3 wird im Ausführungsbeispiel bei Einfahren der Aufzugskabine in die Haltestelle in Längsrichtung verschoben, wobei die Aufzugskabine als externe Einrichtung fungiert, wodurch der Winkelhebel 4 derart verschwenkt wird, dass der Riegel 2 in seine Freigabestellung überführt wird. Eine Betätigung des Sicherheitsschalters oder der Notentriegelung erfolgt hierbei nicht. Die Schließstellung der Verriegelung wird hierbei durch den Sperrmittelschalter 9 überwacht, dessen Sicherheitsschalterbrücke über den Flansch 10 mit dem Riegel 2 verbunden ist.

Um eine Notentriegelung des Türverschlusses und eine Schaltung der Sicherheitseinrichtung zu bewirken, ist ein drehbar gelagerter Mitnehmer 11 vorgesehen, der durch einen korrespondierenden, nicht dargestellten Schlüssel entgegen dem Uhrzeigersinn (Pfeilrichtung) von der Stellung gemäß Figur 1a in die Stellung gemäß Figur 1b überführbar ist. Der Mitnehmer 11 greift hierbei an eine um dessen Achse drehbar gelagerte Nockenscheibe 12 an, die mit einem Angriffspunkt 13 ein vorzugsweise als Schieber 14 ausgebildetes Gestängeteil betätigt, wobei nach dem Ausführungsbeispiel der Schieber 14 in Längsrichtung verschoben wird. Hierzu greift die Nockenscheibe mit einem Stift 15 in ein Langloch des Schiebers 14 ein, so dass der Schieber 14 ausschließlich eine Längsbewegung durchführt. Der Schieber 14 ist hierbei als Winkelstange mit zwei gegensinnigen Abwinkelungen ausgebildet. Der der Nockenscheibe 12 abgewandte Endbereich des Schiebers 14 kann unter Betätigung des Mitnehmers 11 an dem Koppelungsmechanismus, genauer an dem Winkelhebel 4, im besonderen an der Gelenkverbindung 6, angreifen. Hierzu ist der Schieber 14 mit einem quer zur Schieberlängsrichtung in Richtung auf die Gelenkverbindung 6 vorstehenden Steg 16 versehen, der als umgebördeltes Ende des Schiebers ausgeführt ist. Der Steg 16 ist an dem Gelenkstift 6a so angeordnet, dass bei einer durch die Zugstange 3 erfolgten Verschwenkung des Winkelhebels 4 der Gelenkstift 6a noch an den Steg 16 unter Verschiebung des Schiebers 14 angreift, wodurch der Mitnehmer 11 entkoppelt ist. Hierzu ist der Steg an dem der der Wirkrichtung der Zugstange abgewandten Seite des Gelenkstiftes angeordnet, wobei an Stelle des Gelenkstiftes auch ein anderer an geeigneter Stelle angebrachter Angriffspunkt ausgewählt werden kann. Jedoch kann durch eine Verdrehung des Mitnehmers 11 durch einen Schlüssel unter Verschiebung des Schiebers 14 der Steg 16 an dem Gelenkstück 6a angreifen, wodurch der Winkelhebel 4 derart verschwenkbar ist, dass der Riegel 2 in seine Freigabestellung überführbar ist.

Die Nockenscheibe 12 weist ferner, vorzugsweise dem Angriffspunkt an dem Schieber 14 gegenüberliegend, eine Kurve 17 auf, durch die ein Betätigungselement 18, das als Rolle ausgeführt sein kann, des als zwangsöffnende Sicherheitsschalter 19 ausgeführten Sicherheitsschalters betätigbar ist. Das Betätigungselement 18 des Sicherheitsschalters greift hierbei zur Schaltung des Schalters 19 in eine Ausnehmung des korrespondierenden Bauteils, hier dem Außenumfang der Nockenscheibe ein, wobei dies durch Federkraft gegen das Bauteil kraftbeaufschlagt wird. Hierdurch kann bereits der Schalter in seiner Schaltstellung gehalten werden. Der aus Nockenscheibe 12 und Schieber 14 bestehende Übertragungsmechanismus kann so ausgeführt sein, dass der Sicherheitsschalter 19 betätigt wird, bevor der Riegel 2 in seiner endgültigen Freigabestellung liegt. Der Schalter ist hierbei derart mit der Aufzugssteuerung verbunden, dass durch Betätigung des Sicherheitsschalters der Normalbetrieb unterbrechbar oder wiederaufnehmbar ist. An dem Sicherheitsschalter ist ferner ein Schließkontakt 20 zur automatischen Auslösung eines beweglichen Anschlages des zugeordneten Aufzuges angeordnet.

Durch die Anordnung der Nockenscheibe kann ferner ein ausreichender Schaltweg bzw. Schaltwinkel vorgesehen sein, der Fehlbedienungen bzw. Fehlauslösungen des Schalters verhindert. Es versteht sich, dass durch die Anordnung eines Betätigungselementes, wie des Schiebers 14, die Lage des Mitnehmers 11 und des Schalters 19 auf vielfältige Weise variiert werden kann.

Ferner ist wahlweise ein Sperrmittel 38 vorgesehen, welches eine unbeabsichtigte Rücküberführung des Kontaktbrückenträgers 21 des Sicherheitsschalters in eine die Wiederaufnahme der Normalfahrt des Aufzuges gestattende Position verhindert. Das Sperrmittel 38 weist einen Sperrstift 39 auf, der durch eine Feder im Kontaktbrückenträger 21 einrastet, wodurch der Sicherheitsschalter 19 in seiner geöffneten Stellung gehalten wird. Das Sperrmittel kann nur durch eine bewusste Handlung vorzugsweise mit einem speziellen Werkzeug wie dem Notentriegelungsschlüssel gelöst werden.

Nach einer alternativen Ausführungsform kann zusätzlich zu dem Mitnehmer 11, durch den über die Nockenscheibe als Betätigungsmechanismus der Sicherheitsschalter und über den Übertragungsmechanismus zugleich auch die Notentriegelung betätigbar ist, ein weiterer Mitnehmer 11a vorgesehen sein, durch den nur die Notentriegelung aber nicht der Schalter betätigbar ist. Der Mitnehmer 11a ist hierbei an der Drehachse des Winkelhebels 4 angeordnet. Die Mitnehmer und die diesen zugeordnete Schlüssel sind verschieden ausgeführt, so dass durch den dem Mitnehmer 11a zugeordnete Schlüssel nicht der Mitnehmer 11 betätigbar ist.

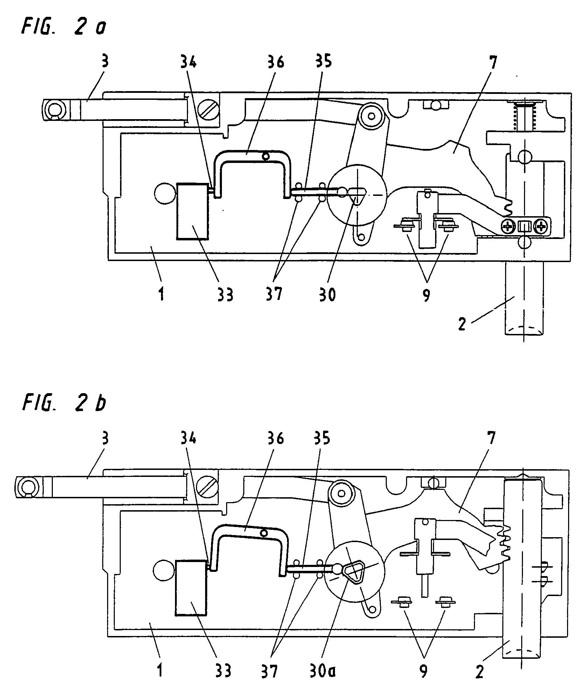

Die Figuren 2a,2b zeigen eine alternative Ausführungsform des Türverschlusses, wobei gleiche Merkmale mit gleichen Bezugsziffern versehen sind.

Im Unterschied zu dem Ausführungsbeispiel der Figur 1 ist der Mitnehmer 30 an der Drehachse des Winkelhebels 4 angeordnet. Das Betätigungsmittel umfasst ein längsverschiebliches Gestängeteil 35 und eine Übersetzung in Form einer Wippe 36, wobei die Übersetzung unmittelbar auf das Betätigungsorgan 34 des Sicherheitsschalters wirkt. Das Gestängeteil 35 ist durch eine Führung in Form von beidseitig angeordneten Führungsstiften 37 gelagert und wird durch Angriff des auf den Mitnehmer aufgesetzten Notentriegelungsschlüssel betätigt. Durch die asymmetrisch gelagerte Wippe 36, die nach dem Beispiel U-förmig ausgeführt ist, ist eine Wegübersetzung realisiert, so dass eine geringe Bewegung des Gestängeteils in eine größere Bewegung des Betätigungsstößels übersetzt wird. Es ist für den Fachmann ersichtlich, dass die Wippe auch anders ausgeführt sein kann. Alternativ kann bei geeigneter Ausgestaltung der Schieber auch an einem anderen Bereich des Koppelungsmechanismus angreifen, um den Schalter bei Betätigung des Mitnehmers durch den Notentriegelungsschüssel zu schalten, wobei eine Schaltung bei Betätigung des Koppelungsmechanismus durch eine externe Einrichtung verhindert ist, wozu der Mitnehmer jeweils unterschiedliche Aktionsfelder oder Betätigungswege aufweisen kann.

Durch Betätigung des Mitnehmers 30 wird ferner wie in dem Ausführungsbeispiel nach Figur 1 der Riegel 2 durch den Winkelhebel 4 in seine Freigabestellung überführt wird und gleichzeitig, vorzugsweise zeitlich vorgeschaltet, der Schalter geschaltet.

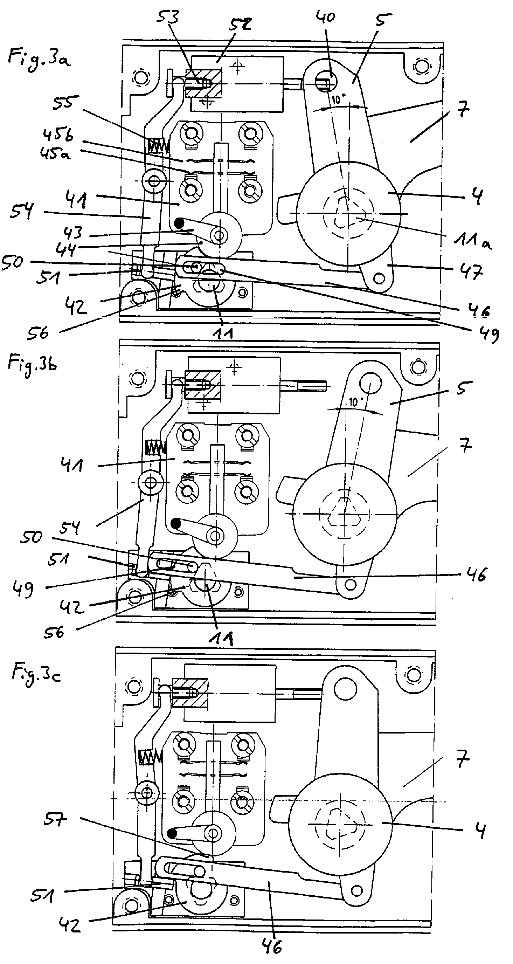

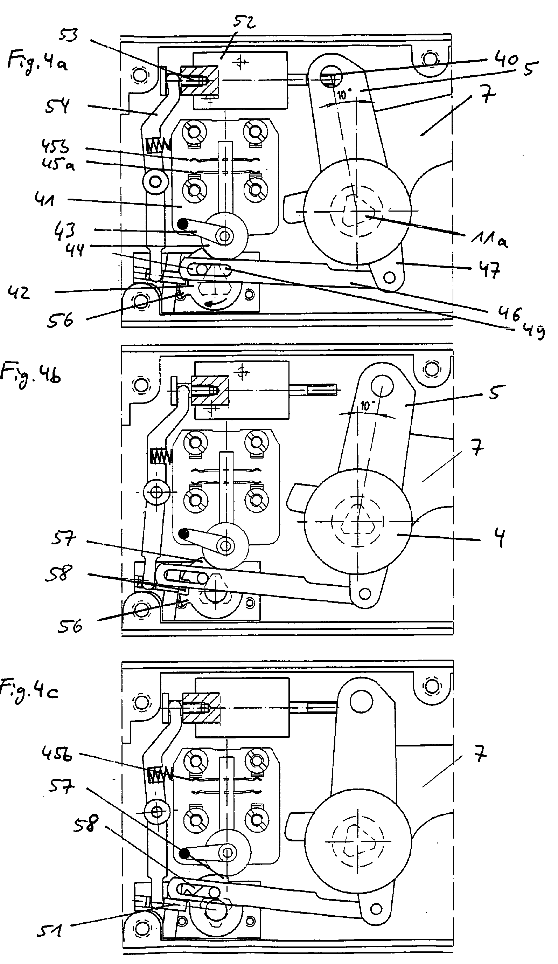

Die Figuren 3 und 4 zeigen Ausschnitte zweier alternativer Ausführungsformen des erfindungsgemäßen Türverschlusses, wobei gleiche Bauteile mit gleichen Bezugsziffern wie in den Figuren 1 und 2 versehen sind. Es versteht sich, dass der in den Figuren rechts des Winkelhebels 4 angeordnete Bereich des Türverschlusses identisch zu dem der Figuren 1 und 2 ausgebildet sein kann, was auch für die Position des Riegels 2 und des Sperrmittelschalters 9 bei den unterschiedlichen Stellungen des Winkelhebels gilt. Auch wirkt der Winkelhebel 4 mit einer Zugstange (nicht dargestellt) entsprechend der Zugstange 3 der Figuren 1 und 2 zusammen, die an dem Endbereich 40 des Schenkels 5 ankoppelt. Auch gemäß den Ausführungsbeispielen der Figuren 3 und 4 ist an dem Drehpunkt des Betätigungsorgans zur Notentriegelung des Riegels 2, nach dem Ausführungsbeispiel an dem Drehpunkt des mit einer Verzahnung versehenen Schenkels 7, ein zusätzlicher Mitnehmer 11a der Notentriegelung in Standardausführung angebracht, der bei dem erfindungsgemäßen Türverschluss jedoch nicht benutzt wird oder nicht benutzt werden muss.

Der Türverschluss gemäß Figur 3 weist einen Sicherheitsschalter 41 auf, der wie in den Figuren 1 und 2 zwangsöffnende Eigenschaften und die für einen Sicherheitsschalter erforderlichen Trennstrecken aufweist und insbesondere die Erfordernisse nach EN 81-1,14.1.2.2 erfüllen kann. Der Mitnehmer 11 der Notentriegelung betätigt über einen Mechanismus, der nach dem Ausführungsbeispiel ein Drehteil umfasst, das beispielsweise als Nockenscheibe bzw. Kurvenscheibe 42 ausgeführt sein kann, den Sicherheitsschalter 41. Der Mitnehmer 11 ist hierbei im Drehpunkt der Nockenscheibe 42 gelagert, gegebenenfalls kann jedoch auch eine indirekte Betätigung erfolgen. Die Nockenscheibe 42 wirkt über einen Betätigungsmechanismus, der hier aus einer an einem Hebel 43 gelagerten Mitnehmerrolle 44 besteht, auf den Sicherheitsschalter, um wahlweise die Kontakte 45a, 45b zu schließen oder zu öffnen. Der Mitnehmer 11 wirkt ferner mit einem Übertragungsmechanismus zur Betätigung des Riegels 2 (nicht dargestellt) zur Notentriegelung des Türverschlusses zusammen, wobei der Übertragungsmechanismus ein Gestängeteil 46 aufweist, welches an einem Endbereich an einem Fortsatz des Betätigungsorgans des Riegels 2 angreift, nach dem Ausführungsbeispiel an einem weiteren Schenkel 47 des Winkelhebels 4, der auf der dem Schenkel 5 gegenüberliegenden Seite des Winkelhebeldrehpunktes, hier in etwa in Verlängerung des Schenkels 5, angeordnet ist. Zur Entkoppelung einer bestimmungsgemäßen Betätigung des Winkelhebels 4 bei einer Betätigung der Zugstange ist der Mitnehmer 11 von dem Übertragungsmechanismus bzw. dem Gestängeteil 46 entkoppelt, wozu nach dem Ausführungsbeispiel ein Langloch 49 vorgesehen ist, in welches ein Mitnehmer 50 der Nockenscheibe 42 eingreift.

Zur Sperrung der Notentriegelung in ihrer den Sicherheitsschalter 41 öffnenden Stellung, in welcher somit ein normaler Fahrbetrieb des zugeordneten Aufzuges nicht mehr möglich ist, ist ein als Stift ausgeführtes Sperrmittel 51 vorgesehen, welches eine Rückstellbewegung verhindernd an der Nockenscheibe 42 angreift. Die Sperrung erfolgt hier unter Ausbildung einer Formschlussverbindung in Bewegungsrichtung des gesperrten Elementes. Es versteht sich, dass das Sperrmittel 51 gegebenenfalls auch an einem anderen geeigneten Element des Übertragungsmechanismus oder dem Mitnehmer angreifen kann, wie beispielsweise dem Gestängeteil 46. Das Sperrmittel wird hierbei mittels eines Elektromagneten 52 oder eine anderen elektrischen Einrichtung betätigt, wozu an dem Elektromagneten 52 ein gegenüber diesem verschiebbarer Anker 53 und eine Wippe 54 zur Kraftübertragung vorgesehen sind. Zur Überführung der Wippe 54 in ihre Ausgangsposition ist ein Rückstellmechanismus 55 vorgesehen, der hier als Feder ausgeführt ist. Der Elektromagnet 52 ist durch eine Fernübertragung ansteuerbar, die außerhalb des Türverschlusses angeordnet ist, beispielsweise in dem Triebwerksraum des Aufzuges.

In der Schaltstellung gemäß Fig. 3 befindet sich der Türverschluss gemäß der Stellung des Betätigungsorgans des Riegels, genauer gesagt der Stellung des Winkelhebels 4, in entriegeltem Zustand. Die Notentriegelung mit dem Mitnehmer 11 wurde hierbei nicht betätigt, die Notentriegelung befindet sich in ihrer Neutralstellung. Die Kontakte 45a des Sicherheitsschalters 41 sind nicht betätigt, wodurch ein normaler Fahrbetrieb des Aufzuges ermöglicht ist. Das stiftförmige Sperrmittel 51 befindet sich in dieser Schaltstellung des Türverschlusses in einer NichtSperrstellung, wozu dieses nach der Figur außenseitig an der Nockenscheibe 42 anliegt und gegen diese drücken kann. Der Elektromagnet 52 ist hierbei nicht betätigt. Aufgrund der Entkoppelung des Übertragungsmechanismus durch das Langloch 49 von dem Koppelungsmechanismus wird der Mitnehmer 11 der Notentriegelung von dem Sicherheitsschalter 41 entkoppelt, entsprechend einem normalen Fahrbetrieb des Aufzuges.

Figur 3b zeigt den Türverschluss in verriegelter Stellung bei Normalbetrieb. Das Betätigungsorgan bzw. der Winkelhebel 4 befinden sich in einer Stellung mit ausgefahrenem Riegel entsprechend der Anordnung gemäß Fig. 1a. Die Notentriegelung kann hierbei durch Drehen des Mitnehmers 11 im Uhrzeigersinn jederzeit betätigt werden, da durch die Stellung des Drehteils bzw. der Nockenscheibe 42 relativ zu dem Übertragungsmechanismus bzw. dem Gestängeteil 46 die Entkoppelung aufgehoben ist und der Mitnehmer 50 sich in der Endstellung des Langloches 49 befindet. Die Bewegung der Nockenscheibe 42 wird durch das Sperrmittel 51 nicht behindert, welches nicht-sperrend an dem Umfang der Nockenscheibe 42 anliegen kann. Der Elektromagnet ist in betätigtem Zustand dargestellt, was jedoch ohne Bedeutung ist. Die Schaltstellung der Kontakte des Sicherheitsschalters 41 entspricht derjenigen gemäß Fig. 3a.

Fig. 3c zeigt den Türverschluss in entriegelter Stellung durch Betätigung des Mitnehmers 11 der indirekten Notentriegelung, welcher über den Übertragungsmechanismus bzw. das Gestängeteil 46 auf den Koppelmechanismus des Riegels, genauer gesagt den Winkelhebel 4, wirkt. Hierzu wurde der Mitnehmer 11 und mit diesem die Nockenscheibe 42 im Uhrzeigersinn gedreht. Durch Betätigung des Mitnehmers 11 wurde der als Zwangskontakt wirkende Sicherheitsschalter 41 in seine Offenstellung überführt, wodurch ein normaler Fahrbetrieb des Aufzuges nicht mehr möglich ist. Gleichzeitig wurden die Kontakte 45b in Schließstellung gebracht, um einen Schließer zu betätigen, der eine Auslösung des beweglichen Anschlages zur Begrenzung der Kabinenbewegung bewirken kann.

Eine Rückstellung der Notentriegelung in eine Schließstellung des Sicherheitsschalters 41, die einen normalen Fahrbetrieb des Aufzuges ermöglicht, wird durch das Sperrmittel 51 verhindert. Das Sperrmittel 51 wirkt hierbei mit dem Notentriegelungsmechanismus zusammen, genauer gesagt mit dem Drehteil bzw. der Nockenscheibe 42. Der Sperrbereich der Nockenscheibe 42 wird hier durch die Schulter 56 derselben gebildet. Über die weitere Schulter 57 der Nockenscheibe wird der Sicherheitsschalter 41 betätigt. Der Winkelhebel 4 befindet sich hierbei in einer Zwischenstellung bezogen auf die Stellungen der Figuren 3a und 3b. Ein Normalbetrieb des Aufzuges ist in dieser Stellung des Winkelhebels jedoch noch nicht möglich.

Zur Aufnahme eines normalen Fahrbetriebes ist eine Rückstellung der Notentriegelung und mit dieser des Sicherheitsschalters 41 notwendig. Eine Betätigung des Sperrmittels 51 kann hierbei durch einen Elektromagneten 52 erfolgen. Hierzu kann durch Betätigung des Elektromagneten über eine Wippe 54 das Sperrmittel 51 von der Nockenscheibe oder einem anderen Bauteil der Notentriegelung in eine Entsperrstellung überführt werden, beispielsweise gemäß Fig. 3a oder 3b. Insbesondere kann der Elektromagnet über eine Zeitschaltung derart betätigt werden, dass innerhalb einer vorgegebenen oder bestimmbaren Zeit eine Rückstellung des Sperrmittels erfolgen muss, um einen mittels erfolgen muss, um einen Normalbetrieb des Aufzuges wiederaufnehmen zu können.

Die Ausbildung des Türverschlusses gemäß Fig. 4 entspricht im Wesentlichen derjenigen gemäß Fig. 3, wobei gleiche Bauteile mit gleichen Bezugsziffern versehen sind. Im Unterschied zu Fig. 3 ist das Sperrmittel des Türverschlusses gemäß Fig. 4 derart ausgebildet, dass die Notentriegelung sowohl in der dem geschlossenen Sicherheitsschalter 41 zugeordneten Stellung (siehe Fig. A) mittels des Sperrmittels 51 gesperrt ist, wobei in dieser Stellung ein Normalbetrieb des Aufzuges möglich ist, als auch in der den Sicherheitsschalter 41 öffnenden Stellung gemäß Fig. 4c, in welcher ein Normalbetrieb des Aufzuges nicht mehr möglich ist.

In der in Fig. 4a gezeigten Schaltstellung des Türverschlusses, die im Wesentlichen der Schaltstellung gemäß Fig. 3b entspricht, greift das Sperrmittel 51, welches wiederum mittels des Elektromagneten 52 betätigbar ist und gemäß dem Ausführungsbeispiel über eine Wippe 54 mit diesem zusammenwirkt, mit einem Sperrbereich der Notentriegelung, genauer gesagt der Nockenscheibe 42, zusammen. Der Sperrbereich ist hierbei als Einkerbung 58 in dem Umfang der Nockenscheibe ausgebildet. Die Notentriegelung ist somit nicht betätigbar.

In der Schaltstellung gemäß Fig. 4b, die im Wesentlichen der Schaltstellung gemäß Fig. 3a entspricht, ist der Türverschluss in verriegelter Stellung und die Notentriegelung kann betätigt werden, da das Sperrmittel sich in Entsperrstellung befindet. Der Elektromagnet 52 ist hierbei betätigt, wobei das Sperrmittel 51 über die Wippe 54 aus der Einkerbung 58 entfernt ist.

In der Schaltstellung gemäß Fig. 4c, die im Wesentlichen der Schaltstellung gemäß Fig. 3c entspricht, ist der Türverschluss entriegelt und der Zwangskontakt geöffnet, wobei der Schließer zur Auslösung des beweglichen Anschlages betätigt ist. Die Rückstellung der indirekten Notentriegelung wird wiederum durch Angriff des stiftförmigen Sperrmittels 51 an der Schulter 56 der Nockenscheibe verhindert, welche zur Rückstellung der Notentriegelung entgegen dem Uhrzeigersinn zu drehen wäre.

Es versteht sich, dass der Elektromagnet auch in anderer geeigneter Weise mit dem Sperrmittel zusammenwirken kann, wozu beispielsweise der Elektromagnet in Verlängerung des beispielsweise stiftförmigen Sperrmittels angeordnet sein kann.

Es versteht sich ferner, dass die Notentriegelung auch ausschließlich in der Schaltstellung, welche dem einen normalen Fahrbetrieb ermöglichenden geschlossenen Sicherheitsschalter 41 zugeordnet ist, mittels des Sperrmittels gesperrt sein kann und in der Stellung mit geöffnetem Sicherheitsschalter 41, in welcher ein normaler Fahrbetrieb verhindert und gegebenenfalls der oben genannte Schließer mittels der Kontakte 45b geschlossen ist, eine Rückstellung der Notentriegelung ohne vorherige Entsperrung möglich sein kann. Hierzu sind die Sperrbereiche der Notentriegelung, beispielsweise eine entsprechende Einkerbung an dem Umfang der Nockenscheibe 42, in ihrer Lage entsprechend zu wählen, wobei in der Offenstellung des Sicherheitsschalters das Sperrmittel an dem Außenumfang einer radial außen liegenden Schulter anliegen kann, entsprechend Fig. 3b.

### Bezugszeichenliste

- 1: Gehäuse
- 2: Riegel
- 3: Zugstange
- 4: Winkelhebel
- 5: Schenkel
- 6: Gelenkverbindung
- 6a: Gelenkstift
- 7: Schenkel
- 8: Verzahnung
- 9: Sperrmittelschalter
- 10: Flansch
- 11, 11a: Mitnehmer
- 12: Nockenscheibe
- 13: Angriffspunkt
- 14: Schieber
- 15: Stift
- 16: Steg
- 17: Kurve
- 18: Betätigungselement
- 19: Sicherheitsschalter
- 20: Schließkontakt am Sicherheitsschalter
- 21: Kontaktbrückenträger
- 30: Mitnehmer
- 30a: Notentriegelungsschlüssel im Profil
- 33: Sicherheitsschalter
- 34: Betätigungsorgan
- 35: Gestängeteil
- 36: Wippe
- 37: Führungsstift
- 38: Sperrmittel
- 39: Sperrstift
- 40: Endbereich
- 41: Sicherheitsschalter
- 42: Nockenscheibe
- 43: Hebel
- 44: Mitnehmerrolle
- 45a,b: Kontakte
- 46: Gestängeteil
- 47: Schenkel
- 49: Langloch
- 50: Mitnehmer
- 51: Sperrorgan
- 52: Elektromagnet
- 53: Anker
- 54: Wippe
- 55: Rückstellmechanismus
- 56: Schulter
- 57: Schulter
- 58: Einkerbung

## Patentansprüche

1. Türverschluss für eine Tür einer Maschine oder eines Aufzuges, wobei der Türverschluss ein Gehäuse (1) und einen Riegel (2) aufweist, der bezüglich der Tür in eine Verriegelungsstellung und in eine Freigabestellung überführbar ist und der in dem Gehäuse (1) gelagert ist, wobei der Verschluss eine manuell betätigbare Notentriegelung (11, 12, 14, 30) zur Überführung des Riegels (2) in seine Freigabestellung aufweist, wobei die Notentriegelung (11, 12, 14, 30) einen Mitnehmer (11) aufweist, der unter Überführung des Riegels (2) in die Freigabestellung durch einen Notentriegelungsschlüssel betätigbar ist, wobei an oder in dem Gehäuse (1) ein zwangsöffnender Sicherheitsschalter (19, 33) und ein diesem zugeordneter manuell betätigbarer Mitnehmer (11) zur Betätigung des Sicherheitsschalters vorgesehen ist, welcher von dem Mitnehmer der Notentriegelung verschieden oder mit diesem identisch ist, **dadurch gekennzeicchnet,** dass der Verschluss einen Sperrmittelschalter (9) umfasst, welcher die Verriegelungsstellung des Riegels (2) überwacht, und dass der Sicherheitsschalter derart mit der Notentriegelung mechanisch gekoppelt ist, dass der zwangsöffnende Sicherheitsschalter (19, 33) zwangsläufig und ausschließlich bei Betätigung des Türverschlusses mittels des Mitnehmers (11) der Notentriegelung (11, 12, 14, 30) auslöst, nicht jedoch durch den Regelbetrieb, und dass durch den Sicherheitsschalter (19, 33) eine Sicherheitsfunktion auslösbar ist, nämlich ein Normalbetrieb einer der Tür zugeordneten Einrichtung unterbrechbar und/oder wieder aufnehmbar ist.

2. Türverschluss nach Anspruch 1, **dadurch gekennzeichnet, dass** der Riegel (2) mit einem Koppelungsmechanismus (3, 4) zusammenwirkt, der durch eine externe Einrichtung unter Überführung des Riegels (2) in seine Freigabestellung betätigbar ist, dass der Mitnehmer (11, 30) des Schalters und/oder der Notentriegelung von dem Koppelungsmechanismus (3, 4) getrennt angeordnet ist und dass ein Übertragungsmechanismus (12, 14) zur Übertragung einer Bewegung des Mitnehmers auf den Koppelungsmechanismus und/oder auf den Riegel (2) vorgesehen ist, durch welchen der Riegel (2) in seine Freigabestellung überführbar ist.

3. Türverschluss nach Anspruch 2, **dadurch ge**- **kennzeichnet,** dass der Übertragungsmechanismus (12, 14) von dem Koppelungsmechanismus (3, 4) und/oder von dem Riegel (2) derart entkoppelt ist, dass bei einer Betätigung des Koppelungsmechanismus durch das externe Element der Riegel (2) ohne Auslösung der Sicherheitseinrichtung in seine Freigabestellung überführbar ist.

4. Türverschluss nach Anspruch 2 oder 3, **dadurch gekennzeichnet, dass** der Übertragungsmechanismus ein Gestängeteil (14) aufweist, das durch den Mitnehmer (11) verschieb- und/oder verschwenkbar ist.

5. Türverschluss nach einem der Ansprüche 1 bis 4, **dadurch gekennzeichnet, dass** das an dem Sicherheitsschalter (33) angreifende Betätigungsmittel als in dem Gehäuse (1) gelagerter Schieber (35) oder als Drehteil (12) ausgeführt ist.

6. Türverschluss nach einem der Ansprüche 1 bis 5, **dadurch gekennzeichnet, dass** der Übertragungsmechanismus (12, 14) ein Drehteil (12) und ein mit diesem gekoppeltes Gestängeteil (14) aufweist und dass das Drehteil (12) oder das Gestängeteil (14) unmittelbar durch den Mitnehmer (11) betätigbar ist und das jeweils andere Bauteil mit dem Koppelungsmechanismus (3, 4) und/oder dem Riegel (2) zusammenwirkt.

7. Türverschluss nach einem der Ansprüche 1 bis 6, **dadurch gekennzeichnet, dass** zwischen Mitnehmer (30, 30a) und Sicherheitsschalter (33) eine Übersetzung (36) vorgesehen ist, die eine axiale und/oder rotatorische Bewegung eines zugeordneten Notentriegelungsschlüssels (30a) in eine solche größeren Weges übersetzt, die auf den Sicherheitsschalter (33) wirkt.

8. Türverschluss nach einem der Ansprüche 1 bis 7, **dadurch gekenntzeichnet,** dass der Türverschluss derart ausgeführt ist, dass durch Betätigung der Notentriegelung zunächst der Sicherheitsschalter (19, 33) betätigt und zeitlich nachfolgend hierzu der Riegel (2) in seine Freigabestellung überführt wird.

9. Türverschluss nach einem der Ansprüche 1 bis 8, **dadurch gekennzeichnet, dass** der für die Notentriegelung und/oder dem Schalter vorgesehene Mitnehmer (11) über eine Übertragung (12, 14) an einem Schenkel (5) eines Winkelhebels (4) angreift, durch den der Riegel (2) in die Freigabestellung überführbar ist.

10. Türverschluss nach einem der Ansprüche 1 bis 9, **dadurch gekennzeichnet, dass** durch einen Sicherheitsstromkreis unter Schaltung des Sicherheitsschalters (19, 33) ein Normalbetrieb einer der Tür zugeordneten Einrichtung unterbrechbar und/oder wiederaufnehmbar ist.

11. Türverschluss nach einem der Ansprüche 1 bis 10, **dadurch gekennzeichnet, dass** ein Sperrmittel (38) zur Sperrung des Sicherheitsschalters (19) zumindest in einer Schliessstellung des Sicherheitsschalters (19) und/oder zumindest in einer einen normalen Fahrbetrieb des Aufzuges verhindernden Offenstellung des Sicherheitsschalters (19) vorgesehen ist und/oder dass ein Sperrmittel (51) zur Sperrung der Notentriegelung (11, 12, 14, 30) zumindest in ihrem unbetätigten Zustand und/oder in ihrem betätigtem, einen Notfahrbetrieb der Maschine oder des Aufzuges ermöglichenden Zustand vorgesehen ist.

12. Türverschluss nach Anspruch 11, **dadurch gekennzeichnet, dass** das Sperrmittel (38, 51) im Sperrzustand unmittelbar an dem Sicherheitsschalter (19) und/oder dem Übertragungsmechanismus (12, 14) und/oder dem Mitnehmer (11) angreift.

13. Türverschluss nach Anspruch 12, **dadurch gekennzeichnet, dass** Mittel (52) zur elektrischen oder elektromagnetischen Betätigung und/oder Rückstellung des Sperrmittels (51) in dessen Entsperrstellung vorgesehen sind.

14. Türverschluss nach einem der Ansprüche 1 bis 13, **dadurch gekennzeichnet, dass** der Sicherheitsschalter (19) derart mit der Notentriegelung gekoppelt ist, dass bei Betätigung des Mitnehmers des Schalters (19, 33) zur Auslösung einer Sicherheitsfunktion die Notentriegelung unter zumindest teilweiser Überführung des Riegels in die Freigabestellung betätigt wird.

15. Türverschluss nach einem der Ansprüche 1 bis 14, **dadurch gekennzeichnet, dass** die Notentriegelung einen zusätzlichen separaten Mitnehmer (11a) aufweist.

16. Türverschluss nach Anspruch 15, **dadurch gekennzeichnet, dass** für den Mitnehmer (11) des Schalters (19, 33) und für den zusätzlichen Mitnehmer (11a) der Notentriegelung verschiedene Schlüssel vorgesehen sind.

17. Türverschluss nach einem der Ansprüche 1 bis 16, **dadurch gekennzeichnet, dass** die Notentriegelung unabhängig von dem Sicherheitsschalter (19) durch einen ersten Schlüssel betätigbar ist und dass durch einen zweiten Schlüssel Notentriegelung und Sicherheitsschalter gemeinsam betätigbar sind.

18. Türverschluss nach einem der Ansprüche 1 bis 17, **dadurch gekennzeichnet, dass** durch Betätigung des Sicherheitsschalters (19) ein Schließkontakt (20) geschlossen wird, mittels dessen ein beweglicher Anschlag einer dem Türverschluss zuordenbaren Maschine automatisch auslösbar ist.

19. Türverschluss nach Anspruch 18, **dadurch gekennzeichnet, dass** ein durch Betätigung des Sicherheitsschalters (19) betätigbarer Schließkontakt (20) vorgesehen ist, der in Wirkverbindung mit einem beweglicher Anschlag einer dem Türverschluss zugeordneten Maschine steht, und dass bei Betätigung des Schließkontaktes der bewegliche Anschlag automatisch auslöst.

## Claims

1. Door lock for a door of a machine or an escalator, the door lock comprising a housing (1) and a lock bar (2), which is movable into a locking position and into an unlocking position with respect to the door and which is supported in the housing (1), the door lock comprising a manually operable emergency unlocking arrangement (11, 12, 14, 30) for moving the lock bar into its unlocking position, wherein said emergency unlocking arrangement (11, 12, 14, 30) includes a cam (11), which can be operated by means of an emergency unlocking key under the movement of said lock bar (2) into the unlocking position, wherein on or in said housing (1) are provided a positively driven safety switch (19, 33) and an associated manually operable cam (11) for operating said safety switch which is different from or identical with the cam of the emergency unlocking arrangement, **characterized in**
**that** the lock comprises a locking mechanism switch (9) which controls the locking position of the lock bolt (2) and that the safety switch is mechanically coupled to the emergency unlocking arrangement in such a manner that the positively driven safety switch (19, 33) is forcibly triggered and only upon actuation of the door lock by means of the cam (11) of the emergency unlocking arrangement (11, 12, 14, 30), but not by the regular operation, and that a safety function can be triggered through said safety switch (19, 33), i.e. normal operation of an installation associated with the door can be interrupted and/or resumed.

2. Door lock according to claim 1, **characterized in that** the lock bolt (2) cooperates with a coupling mechanism (3, 4) operable by means of an external device under the movement of the lock bolt (2) into its unlocking position, that the cam (11, 30) of the switch and/or emergency unlocking arrangement is disposed separately from the coupling mechanism (3, 4), and that a transmission mechanism (12, 14) for transmitting a movement of the cam to the coupling mechanism and/or to the lock bolt (2) is provided, by means of which said lock bolt (2) can be moved into its unlocking position.

3. Door lock according to claim 2, **characterized in that** said transmission mechanism (12, 14) is decoupled from said coupling mechanism (3, 4) and/or from said lock bolt (2) in such a manner that upon operation of the coupling mechanism by means of said external element, said lock bolt (2) can be moved into its unlocking position without triggering the safety device.

4. Door lock according to claim 2 or 3, **characterized in that** the transmission mechanism includes a linkage element (14) which can be moved and/or pivoted by the cam (11).

5. Door lock according to one of the claims 1 to 4, **characterized in that** actuating means engaging the safety switch (33) are constructed as a slide (35), which is supported in the housing (1), or as a rotary element (12).

6. Door lock according to one of the claims 1 to 5, **characterized in that** the transmission mechanism (12, 14) includes a rotary element (12) and a linkage element (14) coupled to it, and that said rotary element (12) or said linkage element (14) can be directly actuated by the cam (11) and that the respective other component cooperates with the coupling mechanism (3, 4) and/or the lock bolt (2).

7. Door lock according to one of the claims 1 to 6, **characterized in that** between the driver (30, 30a) and the safety switch (33) a translation (36) is provided which translates an axial and/or rotary movement of an associated emergency unlocking key (30a) into one with a greater path length which acts upon said safety switch (33).

8. Door lock according to one of the claims 1 to 7, **characterized in that** the door lock is designed in such a manner that by the actuation of the emergency unlocking arrangement, the safety switch (19, 33) is actuated first and thereafter the lock bolt (2) is moved into its unlocking position.

9. Door lock according to one of the claims 1 to 8, **characterized in that** the cam (11), which is provided for the emergency unlocking arrangement and/or the switch, engages a leg (5) of an angular lever (4) via a transmission (12, 14), the lock bolt (2) being movable into the unlocking position by means of said angular lever.

10. Door lock according to one of the claims 1 to 9, **characterized in that** normal operation of an installation associated with the door can be interrupted and/or resumed under switching of the safety switch (19, 33) by means of a safety circuit.

11. Door lock according to one of the claims 1 to 10, **characterized in that** there is provided a locking device (38) for locking the safety switch (19) at least in a closed position of the safety switch (19) and/or at least in an open position of safety switch (19) which prevents normal driving of the elevator and/or that there is provided a locking device for locking the emergency unlocking arrangement (11, 12, 14, 30) at least in its non-operated condition and/or in its operated condition which enables an emergency driving operation of the machine or elevator.

12. Door lock according to claim 11, **characterized in that** the locking device (38, 51) in the locking condition directly engages the safety switch (19) and/or the transmission mechanism (12, 14) and or the cam (11).

13. Door lock according to claim 12, **characterized in that** there are provided means (52) for the electric or electromagnetic operation and/or resetting of the locking device (51) into the unlocking position thereof.

14. Door lock according to one of the claims 1 to 13, **characterized in that** the safety switch (19) is coupled to the emergency unlocking arrangement in such a manner that upon actuation of the cam of switch (19, 33) for triggering a safety function, said emergency unlocking arrangement is actuated under a movement of the lock bar into the unlocking position thereof, at least partially.

15. Door lock according to one of the claims 1 to 14, **characterized in that** the emergency unlocking arrangement includes an additional separate cam (11a).

16. Door lock according to claim 15, **characterized in that** different keys are provided for the cam (11) of switch (19, 33) and for the additional cam (11 a) of the emergency unlocking arrangement.

17. Door lock according to one of the claims 1 to 16, **characterized in that** the emergency unlocking arrangement can be actuated separately from the safety switch (19) by means of a first key and that the emergency unlocking arrangement and the safety switch can be actuated jointly by means of a second key.

18. Door lock according to one of the claims 1 to 17, **characterized in that** by the actuation of the safety switch (19) a make contact (20) is closed, by means of which make contact a movable stopper of a machine that can be associated with the door lock can be triggered automatically.

19. Door lock according to claim 18, **characterized in that** a make contact (20) is provided which can be operated by means of the safety switch (19) that is operatively connected to a movable stopper of a machine associated with the door lock and that said movable stopper is triggered automatically upon operation of said make contact.

## Revendications

1. Serrure de porte destinée à une porte d'une machine ou d'un ascenseur, ladite serrure de porte comprenant une boîte (1) et un verrou (2) qui peut être transféré dans une position de verrouillage et dans une position de déverrouillage par rapport à la porte et qui est logé dans la boîte (1), la serrure comprenant un dispositif de déverrouillage de secours (11, 12, 14, 30) pour transférer le verrou (2) dans sa position de déverrouillage, ledit dispositif de déverrouillage de secours étant muni d'un entraîneur (11) susceptible d'être manoeuvré par une clé de déverrouillage de secours sous le déplacement du verrou (2) vers la position de déverrouillage, un interrupteur de sécurité du type de commande positive d'ouverture (19, 33) étant prévu sur ou dans la boîte (1) ainsi qu'un entraîneur de commande manuelle (11) associée audit interrupteur de sécurité, pour commander l'interrupteur de sécurité, entraîneur qui est différent de ou identique avec l'entraîneur du dispositif de déverrouillage de secours,
**caractérisée en ce que** la serrure comporte un interrupteur de moyen de blocage (9) contrôlant la position de verrouillage du verrou (2) et que l'interrupteur de sécurité est couplé mécaniquement au dispositif de déverrouillage de secours de sorte que l'interrupteur de sécurité du type de manoeuvre positive d'ouverture (19, 33) se déclenche à force et seulement en cas de l'actionnement de la serrure de porte par l'entraîneur (11) du dispositif de déverrouillage de secours (11, 12, 14, 30) mais pas par le service régulier, et qu'une fonction de sûreté peut être déclenchée par ledit interrupteur de sécurité (19, 33), c'est à dire qu'un service normal d'un dispositif associé à la porte peut être interrompu et/ou remis.

2. Serrure de porte selon la revendication 1, **caractérisée en ce que** le verrou (2) coopère avec un mécanisme d'accouplement (3, 4) susceptible d'être actionné par un dispositif externe sous le déplacement du verrou (2) vers sa position de déverrouillage, que l'entraîneur (11, 30) de l'interrupteur et/ou du dispositif de déverrouillage de secours est disposé séparément du mécanisme d'accouplement (3, 4), et qu'est prévu un mécanisme de transmission (12, 14) pour transmettre un mouvement de l'entraîneur au mécanisme d'accouplement et/ou au verrou (2), le verrou (2) pouvant être transféré dans sa position de déverrouillage par ledit mécanisme de transmission.

3. Serrure de porte selon la revendication 2, **caractérisée en ce que** le mécanisme de transmission (12, 14) est découplé du mécanisme d'accouplement (3, 4) ou du verrou (2) de sorte que lors d'un actionnement du mécanisme d'accouplement par ledit élément externe, ledit verrou (2) peut être transféré dans sa position de déverrouillage sans aucun déclenchement du dispositif de sécurité.

4. Serrure de porte selon la revendication 2 ou 3, **caractérisée en ce que** le mécanisme de transmission comporte un élément de timonerie (14) susceptible d'être déplacé et/ou pivoté par l'entraîneur (11).

5. Serrure de porte selon l'une des revendications 1 à 4, **caractérisée en ce que** des dispositifs d'actionnement engageant à l'interrupteur de sécurité (33) sont construits en forme de coulisseau (35) logé dans la boîte (1) ou en forme d'élément rotatif (12).

6. Serrure de porte selon l'une des revendications 1 à 5, **caractérisée en ce que** le mécanisme de transmission (12, 14) comporte un élément rotatif (12) et un élément de timonerie (14) y accouplé et que l'élément rotatif (12) ou l'élément de timonerie (14) est actionné directement par l'entraîneur (11) et que l'autre élément respectif coopère avec le mécanisme d'accouplement (3, 4) et/ou avec le verrou (2).

7. Serrure de porte selon l'une des revendications 1 à 6, **caractérisée en ce qu'**entre l'entraîneur (30, 30a) et l'interrupteur de sécurité est prévue une translation (36) multipliant un mouvement axial et/ou rotatif d'une clé de déverrouillage de secours (30a) en un mouvement d'une distance plus grande qui agit sur l'interrupteur de sécurité (33).

8. Serrure de porte selon l'une des revendications 1 à 7, **caractérisée en ce que** la serrure de porte est configurée de sorte que l'interrupteur de sécurité (19, 33) est commandé en un premier temps par l'actionnement du dispositif de déverrouillage de secours, puis le verrou (2) est transféré dans sa position de déverrouillage.

9. Serrure de porte selon l'une des revendications 1 à 8, **caractérisée en ce que** l'entraîneur (11) prévu pour le dispositif de déverrouillage de secours et/ou l'interrupteur engage à une branche (5) d'un levier angulaire (4) par lequel le verrou (2) peut être transféré dans sa position de déverrouillage.

10. Serrure de porte selon l'une des revendications 1 à 9, **caractérisée en ce qu'**un service normal d'un dispositif associé à la porte peut être interrompu et/ou remis par un circuit de sécurité, sous la connexion de l'interrupteur de sécurité (19, 33).

11. Serrure de porte selon l'une des revendications 1 à 10, **caractérisée en ce qu'**est prévu un moyen de blocage (38) pour bloquer l'interrupteur de sécurité (19) au moins dans une position fermée de l'interrupteur de sécurité (19) et/ou au moins dans une position ouverte de l'interrupteur (19) empêchant une marche normale de l'ascenseur et/ou qu'il est prévu un moyen de blocage (51) pour bloquer le dispositif de déverrouillage de secours (11, 12, 14, 30) au moins pendant son état pas actionné et/ou pendant son état actionné, ce dernier permettant une marche de secours de la machine ou de l'ascenseur.

12. Serrure de porte selon la revendication 11, **caractérisée en ce que** le moyen de blocage (38, 51), dans l'état bloqué, directement engage à l'interrupteur de sécurité (19) et/ou au mécanisme de transmission (12, 14) et/ou à l'entraîneur (11).

13. Serrure de porte selon la revendication 12, **caractérisée en ce que** sont prévus des moyens (52) pour l'actionnement électrique ou électromagnétique et/ou pour le rappel du moyen de blocage (51) vers sa position de déverrouillage.

14. Serrure de porte selon l'une des revendications 1 à 13, **caractérisée en ce que** l'interrupteur de sécurité (19) est couplé au dispositif de déverrouillage de secours de sorte que lors de l'actionnement de l'entraîneur de l'interrupteur (19, 33) pour le déclenchement d'une fonction de sûreté, le dispositif de déverrouillage de secours est actionné sous un mouvement, au moins partiel, du verrou dans la position de déverrouillage.

15. Serrure de porte selon l'une des revendications 1 à 14, **caractérisée en ce que** le dispositif de déverrouillage de secours comporte un entraîneur particulier additionnel (11 a).

16. Serrure de porte selon la revendication 15, **caractérisée en ce que** sont prévues des clés différentes pour l'entraîneur (11) de l'interrupteur (19, 33) et pour l'entraîneur additionnel (11a) du dispositif de déverrouillage de secours.

17. Serrure de porte selon l'une des revendications 1 à 16, **caractérisée en ce que** le dispositif de déverrouillage de secours est susceptible d'être manoeuvré séparément de l'interrupteur de sécurité (19) par une première clé et que le dispositif de déverrouillage de sécurité et l'interrupteur de sécurité sont susceptibles d'être manoeuvrés conjointement par une deuxième clé.

18. Serrure de porte selon l'une des revendications 1 à 17, **caractérisée en ce que** par l'actionnement de l'interrupteur de sécurité (19) est fermé un contact de travail (20), par lequel peut être déclenché de manière automatique une butée mobile d'une machine susceptible d'être associée à la serrure de porte.

19. Serrure de porte selon la revendication 18, **caractérisée en ce qu'**est prévu un contact de travail (20) susceptible d'être actionné par l'actionnement de l'interrupteur de sécurité (19), contact de travail qui est en liaison active avec une butée mobile d'une machine associée à la serrure de porte et que ladite butée mobile déclenche de manière automatique lors de l'actionnement du contact de travail.
